# FASCICULE DE BREVET EUROPEEN

(11) **EP 0 454 530 B1**
(45) Date de publication et mention de la délivrance du brevet: **28.06.1995**
(21) Numéro de dépôt: 91400985.7
(22) Date de dépôt: 12.04.1991
(51) Int. Cl.: F16H 37/06

(54) **Dispositif d'entraînement électromécanique muni de moyens de secours**
Elektromechanische Antriebseinrichtung mit Notfallvorrichtung
Electromechanical drive with emergency means

(30) Priorité: 27.04.1990 FR 9005440
(43) Date de publication de la demande: 30.10.1991
(73) Titulaire: AVIAC Technologies, 78200 Mantes-la-Jolie (FR); GIAT INDUSTRIES, 78000 Versailles (FR)
(72) Inventeur: Martinez, Yves, F-92800 Puteaux (FR); Neuvessel, Jacques, F-92200 Neuilly sur Seine (FR)
(74) Mandataire: Célanie, Christian

(56) Documents cités:
- FR-A- 1 465 469
- GB-A- 2 216 980
- US-A- 3 986 412
- US-A- 4 760 989

## Description

La présente invention concerne un dispositif d'entraînement électromécanique utilisable notamment dans des équipements ou des installations dont les conditions d'utilisation imposent la présence de moyens de secours.

Ce dispositif est du type comprenant un moteur principal et un mécanisme de transmission à train épicycloïdal comportant un organe d'entrée entraîné par le moteur principal, un organe de sortie et un organe de réaction qui est bloqué en rotation lorsque le moteur principal fonctionne.

Dans un tel dispositif d'entraînement connu, l'organe d'entrée du mécanisme de transmission épicycloïdal est un pignon planétaire, l'organe de sortie est un porte-satellites et l'organe de réaction est une couronne à denture intérieure, cette couronne étant solidaire d'un carter contenant le train épicycloïdal et sur lequel le moteur d'entraînement est monté.

Dans les domaines techniques où l'arrêt incontrôlé ou accidentel du moteur d'entraînement nécessite une intervention rapide, il est en général prévu un moyen d'entraînement manuel à manivelle.

US-A-4 760 989 décrit un dispositif d'entraînement électromécanique du type mentionné plus haut comprenant de plus des moyens d'entraînement auxiliaires, un mécanisme réducteur à au moins un étage, comportant un organe d'entrée entraîné par les moyens d'entraînement auxiliaires et un organe de sortie adapté pour entraîner en rotation l'organe de réaction du train épicycloïdal, des moyens étant prévus pour libérer l'organe de réaction et pour bloquer en rotation l'organe d'entrée du train épicycloïdal lorsque le moteur principal est à l'arrêt et que les moyens d'entraînement auxiliaires doivent fonctionner. Les moyens d'entraînement auxiliaires comprennent un volant de commande manuelle.

L'homme doit alors fournir, lorsque le moteur est défectueux, un travail équivalent à celui demandé au moteur d'entraînement. La puissance qu'il peut fournir reste cependant limitée à une centaine de watt, pendant un temps relativement court.

De plus, les moyens d'entraînement manuels à volant ou à manivelle se situent nécessairement près du dispositif défaillant, ce qui oblige le déplacement d'un intervenant et cela dans des lieux parfois difficilement accessibles ou éloignés.

L'invention a pour but de remédier à ces différents inconvénients et de réaliser un dispositif d'entraînement électromécanique muni de moyens de secours qui soient efficaces et faciles à mettre en oeuvre.

A cet effet, l'invention a pour objet un dispositif d'entraînement électromécanique, comprenant un moteur principal, un mécanisme de transmission à train épicycloïdal comprenant un organe d'entrée entraîné par le moteur principal, un organe de sortie, un organe de réaction qui est bloqué en rotation lorsque le moteur principal fonctionne, des moyens d'entraînement auxiliaires, un mécanisme réducteur à au moins un étage, comportant un organe d'entrée entraîné par les moyens d'entraînement auxiliaires et un organe de sortie adapté pour entraîner en rotation l'organe de réaction du train épicycloïdal, des moyens étant prévus pour libérer l'organe de réaction et pour bloquer en rotation l'organe d'entrée du train épicycloïdal lorsque le moteur principal est à l'arrêt et que les moyens d'entraînement auxiliaires doivent fonctionner, caractérisé en ce que les moyens d'entraînement auxiliaires comprennent un moteur, le moteur principal et le moteur auxiliaire étant disposés parallélement et montés sur un support faisant partie d'un carter à l'intérieur duquel sont reçus le mécanisme à train épicycloïdal et le mécanisme réducteur.

Suivant d'autres caractéristiques :
- l'organe d'entrée du train épicycloïdal est un pignon planétaire, l'organe de sortie est une cage porte-satellites et l'organe de réaction est une couronne à denture intérieure ;
- la couronne comporte de plus une denture extérieure avec laquelle engrène un organe de sortie du mécanisme réducteur ;
- le moteur auxiliaire est alimenté par une dynamo;
- le moteur auxiliaire est alimenté par une source de courant de secours distincte de la source alimentant le moteur principal.

L'invention sera mieux comprise à l'aide de la description qui va suivre, donnée uniquement à titre d'exemple et faite en référence aux dessins annexés sur lesquels :
La Fig. 1. est un schéma de principe d'un dispositif d'entraînement à double entrée selon l'invention;
La Fig. 2 représente un exemple de réalisation d'un tel dispositif.

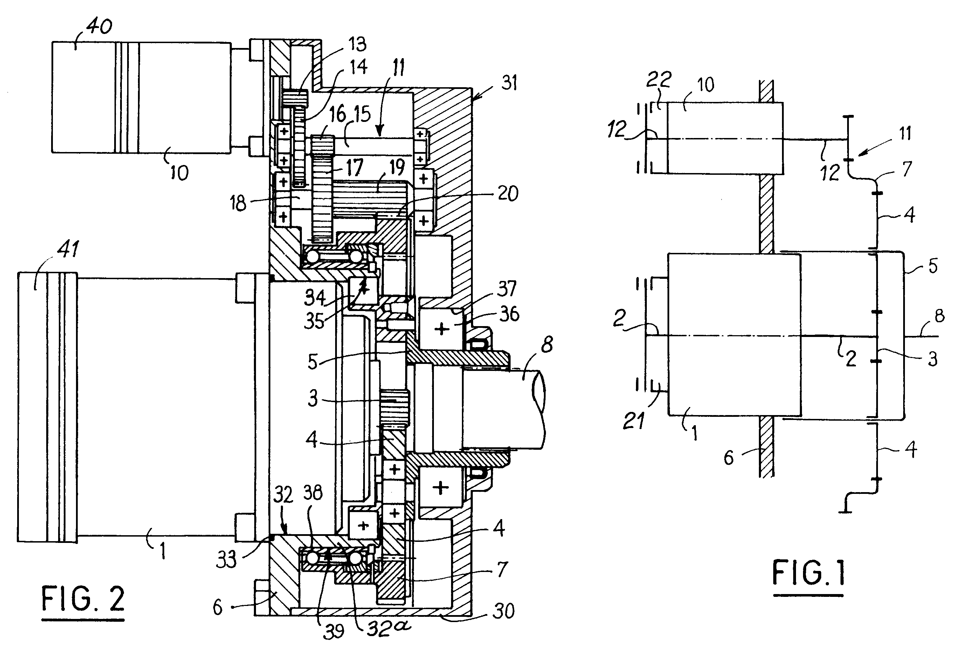

On voit sur la Fig. 1 un schéma de dispositif d'entraînement pouvant être utilisé par exemple, pour une porte à ouverture et fermeture électromécanique et qui comprend un moteur électrique principal 1 dont l'arbre de sortie 2 porte un pignon planétaire 3 faisant partie d'un train épicycloïdal.

Le pignon planétaire 3 engrène avec au moins deux pignons satellites 4 portés par une cage 5 formant porte-satellites et montée à rotation par rapport à un support 6 du moteur principal. Les satellites 4 engrènent avec une couronne 7 à denture intérieure qui constitue un organe de réaction et se trouve bloqué en rotation lors de l'utilisation normale du dispositif c'est-à-dire lorsque le moteur principal 1 fonctionne. La cage 5 est solidaire d'un arbre 8 constituant l'organe de sortie du dispositif d'entraînement et relié à un organe récepteur (non représenté).

Selon l'invention, il est prévu un dispositif d'entraînement de secours comprenant un moteur auxiliaire 10 qui est monté également sur le support 6 et qui est agencé de façon à pouvoir entraîner en rotation la couronne 7, par l'intermédiaire d'un mécanisme réducteur 11.

A cet effet (Fig. 2), l'arbre 12 du moteur auxiliaire porte un pignon 13 qui est en prise avec un pignon 14 porté par un premier arbre intermédiaire 15. Cet arbre intermédiaire porte un second pignon 16 lui-même en prise avec un pignon 17 porté par un deuxième arbre intermédiaire 18. Enfin un dernier pignon 19 porté par le deuxième arbre intermédiaire engrène avec une denture extérieure 20 portée par la couronne 7.

Selon le schéma de la Fig 1, il est également prévu un premier frein 21 permettant de bloquer en rotation l'arbre 2 du moteur principal 1 et un deuxième frein 22 adapté pour pouvoir bloquer en rotation l'arbre 12 du moteur auxiliaire 10.

Les moteurs principal et auxiliaire peuvent être des moteurs électriques de tout type convenable et les freins utilisés pour bloquer les arbres de ces moteurs peuvent être par exemple des freins à disques à commande électromagnétique, tout autre type de frein convenable pouvant toutefois être utilisé. Le moteur auxiliaire peut être alimenté par une dynamo, par une source de courant de secours ou par toute autre source appropriée, distincte de ou s'ajoutant à la source alimentant le moteur principal.

On retrouve sur la Fig. 2 les principaux constituants décrits à propos du schéma de la Fig. 1. On ajoutera simplement que dans le mode de réalisation de cette Fig. 2, le moteur principal et le moteur auxiliaire sont montés parallèlement sur le support 6 qui ferme le corps 30 d'un carter 31 à l'intérieur duquel sont disposés le mécanisme à train épicycloïdal et le mécanisme réducteur. De façon plus précise, le moteur principal 1 est reçu dans un logement cylindrique 32 délimité par une partie 32^{a} du support 6 qui s'étend à l'intérieur du corps de carter 30 et il est en appui contre un épaulement 33 du support. Le train épicycloïdal comprend trois satellites 4 disposés en triangle dans la cage 5 qui porte l'arbre de sortie 8.

Cet ensemble formé par la cage et l'arbre de sortie est monté libre en rotation sur deux paliers formés d'une part d'un roulement à billes 34 reçu dans l'extrémité 35 du logement 32 du support 6 et d'autre part d'un autre roulement à billes 36 reçu dans un logement 37 du corps de carter 30.

La couronne dentée 7 est portée par un roulement 38 à deux rangées de billes dont la bague intérieure s'ajuste sur la surface extérieure 39 de la partie 32^{a} du support.

Les freins permettant de bloquer en rotation l'arbre du moteur principal et l'arbre du moteur auxiliaire sont protégés par des capots 40, 41.

Le fonctionnement d'un tel dispositif est le suivant:

En fonctionnement normal, c'est le moteur principal qui entraîne l'arbre de sortie 8, par l'intermédiaire du mécanisme de transmission à train épicycloïdal. La couronne 7 sert alors d'organe de réaction, en étant bloquée en rotation par le mécanisme réducteur et le frein 22 agissant sur l'arbre 12 du moteur auxiliaire.

Si pour une raison ou pour une autre le moteur principal s'arrête, le moteur auxiliaire est mis en marche, soit manuellement soit automatiquement et le frein 21 est actionné pour bloquer l'arbre 2 du moteur principal. L'arbre de sortie 8 est alors entraîné à partir du moteur auxiliaire, par l'intermédiaire du mécanisme réducteur et du train planétaire dont le planétaire 3 devient l'organe de réaction fixe, tandis que la couronne 7 constitue l'organe d'entrée.

Dans un autre exemple d'utilisation, le dispositif peut convenir pour assurer un moyen de déplacement et de secours d'un ascenseur ou autres monte-charges.

Le problème évoqué au début de ce mémoire est ainsi résolu de façon efficace et les moyens mis en jeu sont simples, fiables et peu encombrant.

## Revendications

1. Dispositif d'entraînement électromécanique, comprenant un moteur principal (1), un mécanisme de transmission à train épicycloïdal comprenant un organe d'entrée (3) entraîné par le moteur principal, un organe de sortie (5), un organe de réaction (7) qui est bloqué en rotation lorsque le moteur principal fonctionne, des moyens d'entraînement auxiliaires (10), un mécanisme réducteur (11) à au moins un étage, comportant un organe d'entrée (13) entraîné par les moyens d'entraînement auxiliaires et un organe de sortie (19) adapté pour entraîner en rotation l'organe de réaction (7) du train épicycloïdal, des moyens (21,22) étant prévus pour libérer l'organe de réaction et pour bloquer en rotation l'organe d'entrée du train épicycloïdal lorsque le moteur principal est à l'arrêt et que les moyens d'entraînement auxiliaires doivent fonctionner, caractérisé en ce que les moyens d'entraînement auxiliaires comprennent un moteur (10), le moteur principal (1) et le moteur auxiliaire (10) étant disposés parallèlement et montés sur un support (6) faisant partie d'un carter (31) à l'intérieur duquel sont reçus le mécanisme à train épicycloïdal (3,5,7) et le mécanisme réducteur (11).

2. Dispositif d'entraînement suivant la revendication 1, caractérisé en ce que lesdits moyens de libération de l'organe de réaction et de blocage en rotation de l'organe d'entrée du train épicycloïdal comprennent un frein (21) associé à l'arbre (2) du moteur principal et un frein (22) associé à l'un des organes constituant la chaîne cinématique entre le moteur auxiliaire (10) et l'organe de réaction (7) du train épicycloïdal.

3. Dispositif d'entraînement suivant l'une quelconque des revendications 1 et 2, caractérisé en ce que l'organe d'entrée du train épicycloïdal est un pignon planétaire (3), l'organe de sortie est une cage (5) porte-satellites et l'organe de réaction est une couronne (7) à denture intérieure.

4. Dispositif d'entraînement suivant la revendication 3, caractérisé en ce que la couronne (7) comporte de plus une denture extérieure (20) avec laquelle engrène un organe de sortie (19) du mécanisme réducteur (11).

5. Dispositif d'entraînement suivant l'une quelconque des revendications 1 à 3, caractérisé en ce que le moteur auxiliaire (10) est alimenté par une dynamo.

6. Dispositif d'entraînement suivant l'une quelconque des revendications 1 à 3, caractérisé en ce que le moteur auxiliaire (10) est alimenté par une source de courant de secours, distincte de la source alimentant le moteur principal (1).

7. Dispositif d'entraînement suivant l'une quelconque des revendications 1 à 6, caractérisé en ce que le train épicycloïdal comprend des satellites (4) portés par une cage (5) solidaire d'un arbre de sortie (8), l'ensemble formé par la cage et l'arbre de sortie étant monté rotatif dans deux paliers dont l'un (34) est reçu dans un logement (35) du support (6) et dont l'autre (36) est reçu dans un logement (37) du carter (31).

8. Dispositif d'entraînement suivant l'une quelconque des revendications 1 à 7, caractérisé en ce que la couronne dentée (7) est portée par un roulement (38) comportant une bague intérieure portée par un épaulement (39) du support (6).

## Claims

1. An electromechanical drive device, comprising a main motor (1), a transmission mechanism with an epicyclic train comprising an input element (3) driven by the main motor, an output element (5), a reaction element (7) which is locked against rotation when the main motor is operating, auxiliary drive means (10), a reducer mechanism (11) with at least one stage, comprising an input element (13) driven by the auxiliary drive means, and an output element (19) adapted to drive the reaction element (7) of the epicyclic train in rotation, provision being made for means (21, 22) for releasing the reaction element and for locking the input element of the epicyclic train against rotation when the main motor has stopped and when the auxiliary drive means have to operate; characterized in that the auxiliary drive means comprise a motor (10), the main motor (1) and the auxiliary motor (10) being disposed in parallel and mounted on a support (6) forming part of a housing (31), inside which there are accommodated the mechanism with the epicyclic train (3, 5, 7) and the reducer mechanism (11).

2. A drive device according to claim 1, characterized in that the said means for releasing the reaction element and for locking the input element of the epicyclic train against rotation comprise a brake (21) associated with the shaft (2) of the main motor, and a brake (22) associated with one of the elements constituting the kinematic chain between the auxiliary motor (10) and the reaction element (7) of the epicyclic train.

3. A drive device according to any one of claims 1 and 2, characterized in that the input element of the epicyclic train is a sun gear (3), the output element is a planet carrier cage (5) and the reaction element is a ring (7) with an internal tooth system.

4. A drive device according to claim 3, characterized in that the ring (7) comprises, moreover, an external tooth system (20) wherewith the output element (19) of the reducer mechanism (11) meshes.

5. A drive device according to any one of claims 1 to 3, characterized in that the auxiliary motor (10) is powered by a dynamo.

6. A drive device according to any one of claims 1 to 3, characterized in that the auxiliary motor (10) is powered by an emergency power supply distinct from the supply powering the main motor (1).

7. A drive device according to any one of claims 1 to 6, characterized in that the epicyclic train comprises planet gears (4) carried by a cage (5) joined to an output shaft (8), the assembly formed by the cage and the output shaft being mounted for rotation in two bearings, one (34) whereof is accommodated in a recess (35) of the support (6) and the other (36) whereof is accommodated in a recess (37) of the housing (31).

8. A drive device according to any one of claims 1 to 7, characterized in that the ring gear (7) is carried by a bearing (38) comprising an inner ring carried by a shoulder (39) of the support (6).

## Patentansprüche

1. Elektromagnetische Antriebsvorrichtung mit einem Hauptmotor (1), einem Übersetzungsgetriebe mit Umlaufgetriebezug enthaltend ein durch den Hauptmotor angetriebenes Eingangsorgan (3), ein Ausgangsorgan (5), ein Reaktionsorgan (7), welches beim Betrieb des Hauptmotors drehfest blockiert ist, und enthaltend Hilfsantriebsmitteln (10), und ein mindestens einstufiges Untersetzungsgetriebe (11), welches ein Eingangsorgan (13) aufweist, das durch die Hilfsantriebsmittel angetrieben wird, und weiter enthaltend ein Ausgangsorgan (19), welches das Reaktionsorgan (7) des Umlaufgetriebezuges in Drehbewegung versetzt, und mit Mitteln (21, 22), um das Reaktionsorgan zu lösen und das Eingangsorgang des Getriebeumlaufzuges drehfest zu blockieren, wenn der Hauptmotor zum Stillstand kommt und dann die Hilfsantriebsmittel funktionieren sollen,
**dadurch gekennzeichnet**, **daß**
die Hilfsantriebsmittel einen Motor (10) enthalten und daß der Hauptmotor (1) und der Hilfsmotor (10) parallel angeordnet und auf einer Halterung (6) montiert sind, welche einen Teil eines Gehäuses (31) bildet, in dem der Mechanismus mit Umlaufgetriebezug (3, 5, 7) und das Untersetzungsgetriebe (11) untergebracht sind.

2. Antriebsvorrichtung nach Anspruch 1,
**dadurch gekennzeichnet**, **daß**
die Mittel für die Lösung des Reaktionsorgans und für die drehfeste Blockierung des Eingangsorgans des Umlaufgetriebzuges eine mit der Welle (2) des Hauptmotors verbundene Bremse (21) und eine mit einem der die kinetische Kette bildenden Organe verbundene Bremse zwischen dem Hilfsmotor (10) und dem Reaktionsorgan (7) des Umlaufgetriebezuges aufweisen.

3. Antriebsvorrichtung nach einem der Ansprüche 1 oder 2,
**dadurch gekennzeichnet**, **daß**
das Eingangsorgan des Umlaufgetriebzuges ein Planetenrad (3) ist, und daß das Ausgangsorgan durch einen Satellitenträgerkäfig (5) gebildet wird, und daß das Reaktionsorgan ein Zahnkranz (7) mit Innenverzahnung ist.

4. Antriebsvorrichtung nach Anspruch 3,
**dadurch gekennzeichnet**, **daß**
der Zahnkranz (7) außerdem eine Außenverzahnung (20) aufweist, mit der ein Ausgangsorgan (19) des Untersetzungsgetriebes (11) in Eingriff steht.

5. Antriebsvorrichtung nach einem der Ansprüche 1 bis 3,
**dadurch gekennzeichnet**, **daß**
der Hilfsmotor (10) mit Hilfe eines Dynamos gespeist wird.

6. Antriebsvorrichtung nach einem der Ansprüche 1 bis 3,
**dadurch gekennzeichnet**, **daß**
der Hilfsmotor (10) durch eine Notstromquelle gespeist wird, welche von der Stromquelle unabhängig ist, die den Hauptmotor (1) speist.

7. Antriebsvorrichtung nach einem der Ansprüche 1 bis 6,
**dadurch gekennzeichnet**, **daß**
der Umlaufgetriebezug Satellitenräder (4) aufweist, welche von einem Käfig (5) getragen werden, der mit einer Ausgangswelle (8) verbunden ist, und daß der durch den Käfig und die Ausgangswelle gebildete Zusammenbau drehbeweglich auf zwei Lagerungen gelagert ist, von denen ein Lager (34) in einer Lagerung (35) der Halterung (6) gelagert ist, während das andere Lager (36) in einer Lagerung (37) des Gehäuses (31) sitzt.

8. Antriebsvorrichtung nach einem der Ansprüche 1 bis 7,
**dadurch gekennzeichnet**, **daß**
der Zahnkranz (7) von einem Wälzlager (38) getragen wird, welches einen Innenring aufweist, der von einem Schulteransatz (39) der Halterung (6) gehalten wird.
